# EUROPEAN PATENT APPLICATION

(11) **EP 3 719 980 A1**
(43) Date of publication of application: **07.10.2020**
(21) Application number: 19166500.9
(22) Date of filing: 01.04.2019
(51) Int. Cl.: H02K 41/03, H02K 5/02, H02K 3/28

(54) **ELECTROMOTIVE MACHINE**

(71) Applicant: LIM-Tech Limited, Shepshed, Leicestershire LE12 9NH (GB)
(72) Inventor: PATEL, Kalpeshkumar Arvindbhai, Nr Loughborough, Leicestershire LE12 9HN (GB); YAZID, Muhsien Mohamed Nasr, Nr Loughborough, Leicestershire LE12 9HN (GB)
(74) Representative: Abel & Imray

(57) **Abstract**

A linear electromotive machine, for example a motor, generator and/or eddy-current brake is disclosed. The machine comprises a stator (40) and a rotor (1), the rotor comprising a Halbach magnet array (10) mounted on a fibre-reinforced polymer rotor frame (20). Also disclosed is a transportation system (70) including such a machine and a method of manufacturing such a machine.

## Description

### Field of the Invention

The present invention concerns electromotive machines. More particularly, but not exclusively, this invention concerns a linear electromotive machine comprising a fibre-reinforced polymer rotor frame and Halbach array. The invention also concerns a method of using such an electromotive machine and transportation systems including such an electromotive machine.

### Background of the Invention

As is well known, when an electric motor is driven by an external means, so that the motor's rotor is moved sufficiently quickly relative to its stator, the motor will normally act as a generator of electricity. Equivalently, when sufficient current is supplied to a generator, its rotor will normally move relative to its stator, and the generator will act as a motor. Further, movement of a rotor relative to a stator provides a changing electromagnetic field that will induce eddy-currents in a conductor. As is well known, the eddy-currents in turn generate a field that acts to oppose the motion that created them and accordingly the rotor and stator together act as a brake (known as an eddy-current brake). In view of that interchangeability of function, the term "electromotive machine" is used for convenience herein, to refer interchangeably to motors, generators, and/or eddy-current brakes.

The most well-known construction of electromotive machine comprises a moveable rotor, which rotates inside a fixed, substantially cylindrical stator. The term "rotor" is used herein to describe the passive (not energized) part of the electromotive machine that is moved, by the electromagnetic field of a motor, or to induce current in a generator, or to induce eddy-currents in a brake. In some electromotive machines, the rotor does not rotate but is, for example, translated linearly. The stator is the active (energized) part of the machine that generates the driving electromagnetic field in a motor, or in which current is induced in a generator, or in which eddy-currents are induced in an eddy-current brake. It should be understood that these effects are caused by the relative motion between the stator and the rotor, and in practice either one could be actually stationary.

The stator usually comprises a long length of insulated conductor, wound repeatedly to form a "primary winding". The winding is usually wound onto a ferrous core, for example a laminated steel core, although a non-ferrous core, for example an air core, may also be used. A plurality of primary windings may be present in the stator.

The term "coil" is used to refer to a wound conductor arranged in a stator. The terms "winding" and "windings" are used to refer to a set of coils; the term is often qualified: for example, "phase winding" means all of the coils connected to one phase.

In an eddy-current brake the stator comprises a conductor typically having a different form, for example being a plate.

Electromotive machines can be classified in a number of different ways. One way is by the shape of the stator: it may, for example, be planar (in a linear machine), a cylindrical tube or a disk (in a rotary machine). Linear machines are used in a wide variety of machines, for example in fairground rides, in baggage-handling machines, in urban transport (e.g. monorail) vehicles and in various other launch applications.

Another way of classifying a machine is by the form of its rotor (this is probably the most common approach to classification). There are essentially three broad classes of rotor: rotors comprising a permanent magnet, rotors comprising conductors and rotors with variable magnetic reluctance paths wherein the saliency provides rotary force. The first are found in synchronous electromotive machines, the second especially in induction electromotive machines and the third may be found in reluctance machines. Wound rotors are also commonly found in synchronous machines: turbo-alternators and machines larger than a few kilowatts generally have wound rotors.

Rotors with permanent and wound magnets are typically made from a magnetic core material to confine and guide magnetic flux from the magnets. Materials with a high magnetic permeability are often used for the core, such as iron, steel, and other ferromagnetic materials. The ferromagnetic cores of rotors made from such materials often account for a large portion of the weight of the rotor and can be expensive to produce.

There are two main forms of (primary) windings in use in stators in small and medium-size machines. The first is double-layer windings, which are employed in induction motors and in some motors with permanent magnet excitation; those machines find use in general industrial applications. The second form of windings is concentrated windings, which are in general use only for motors with permanent magnet excitation; those machines are used for both general industrial applications and (notably) in computer hard-disk drives.

Double layer windings are typically wound with the leading side of the coils occupying the top half of a slot and the trailing side occupying the bottom half of a slot one coil pitch away from the leading side. Each coil is seated on top of coils on one side and is seated underneath coils on the other side.

Concentrated windings are arranged adjacent to neighbouring windings and do not overlap (within the same layer). Coils of concentrated windings all lay in the same plane in a single layer. A stator comprising concentrated windings is defined (as used herein) as a stator comprising a plurality of windings each arranged adjacent to, but not overlapping with, the other windings. There may be more than one layer of concentrated windings in a stator. Other types of winding include distributed windings and modular windings, described in more detail by Wang et al, 'Comparative Study of 3-Phase Permanent Magnet Brushless Machines with Concentrated, Distributed and Modular Windings', IET Power Electronics, Machines and Drives, Dublin, Ireland, March 2006, pp. 489 - 493.

The present invention seeks to provide an improved linear electromotive machine rotor.

### Summary of the Invention

The present invention provides, according to a first aspect, a linear electromotive machine comprising a stator and a rotor. The rotor comprises a rotor frame. The rotor further comprises a Halbach magnet array mounted on the rotor frame. The rotor frame may be a fibre-reinforced polymer frame. That is to say, the rotor frame may be made of fibre-reinforced polymer.

Using a Halbach array may remove the need to include a back iron to guide the magnetic flux generated by the rotor magnets of an electromotive machine and/or reduce the size of any back iron required. As it is no longer necessary to include significant quantities of magnetic material in the rotor frame to guide the flux, the frame may be constructed using non-magnetic materials, which may be lighter, such as fibre-reinforced polymer, for example carbon fibre, thereby leading to a weight saving. Thus, use of the Halbach array facilitates a reduction in the weight of the rotor both directly, through the removal of the back iron and indirectly by enabling the use of light materials such as fibre-reinforced polymer. Reducing the weight of the rotor may increase the efficiency of the machine.

A fibre-reinforced polymer may be defined as a composite material made of a polymer matrix reinforced with fibres. The polymer may be a thermoset or thermoplastic polymer, for example epoxy, vinyl ester, polyester thermosetting plastic, or other suitable polymer. The fibre may be carbon, glass, aramid fibres (for example Kevlar fibres), or any other suitable natural or synthetic fibre. Thus, the fibre-reinforced polymer may be a carbon fibre-reinforced polymer (also known as carbon fibre), a glass fibre-reinforced polymer (also known as fibreglass) and/or an aramid fibre-reinforced polymer. The use of fibre-reinforced polymer may allow for a reduction in the weight of the rotor as compared to more conventional materials. It may be that the fibres are non-electrically-conductive. It may be that the fibres are non-metallic.

The rotor frame may be configured to support the magnet array of the rotor. The frame may be made entirely of the fibre-reinforced composite material. Thus, it may be that the frame does not comprise components made from other materials. Constructing the frame wholly from fibre reinforce polymer may simplify construction and/or reduce the weight of the rotor frame. This may also reduce the cost of manufacture of the rotor frame.

It may be that the rotor, for example the rotor frame, does not include any magnetic, for example ferromagnetic or magnetic metallic, components, for example for manipulation of the magnetic flux. As such materials typically used in rotors of electromotive machines are typically dense, not utilising these materials in the rotor frame may reduce the weight of the rotor. It may be that the rotor frame is composed entirely of fibre-reinforced polymer. It may be that the rotor is composed entirely of fibre-reinforced polymer. Alternatively, it may be that one or more metallic components are mounted on the fibre-reinforce-polymer frame, for example one or more fixings, for example a mounting bracket, for example an aluminium mounting bracket, for affixing the rotor to other components in an electromotive drive system, such as a movable carriage . Such fixings may be integrally formed with the rotor frame, or may be mounted on the frame by other means such as adhesives or bolts.

The electromotive machine may be an alternating current synchronous motor. The electromotive machine may be a polyphase machine. Further still, the electromotive machine may be a three-phase machine wherein the three phases of the machine are separated by 120 electrical degrees in time. The advantages of such a current supply in electromotive machines are well known in the art.

The electromotive machine may comprise a first group of coils offset relative to a second group of coils so that corresponding coils of each group are not aligned. In such an arrangement an n-pole harmonic of a magnetic field produced by the groups may be substantially cancelled, where n is a positive, even integer. To achieve this effect the coils of the machine may be offset by one and a half coil pitches, where a coil pitch is the width of one coil, and in such an arrangement each coil of a phase may be linearly positioned half way between two of the coils of the corresponding phase on the opposite side of the stator. An electromotive machine of this type is described in EP 2 074 691, the contents of which is incorporated herein by reference. Alternatively, the windings may be offset by a different distance, or not offset, as in a conventional electromotive machine.

The coils of the machine may be concentrated coils, modular coils or any other suitable type of coils.

As is well known, a Halbach array is an arrangement of permanent magnets, the plurality of magnets making up the array being arranged to provide a strong magnetic field on one side ('the strong field side') and a weak magnetic field ('the weak field side') on the other side, relatively speaking. Typically the magnetic field is cancelled to near zero on the weak field size. This flux distribution is achieved by a rotating pattern of permanent magnets. Each magnet in the array may be rotated with respect to the adjacent magnets in the array. The angle of rotation between adjacent magnets may be 90 degrees (so looking at the front face a pole may be in the following positions in four adjacent magnets: left, up, right, down). Alternatively, the angle of rotation may be less than 90 degrees, for example 45 degrees or less, for example 25 degrees or less.

The Halbach magnet array of the present invention may be comprised of a first row of magnets and a second row of magnets spaced apart from the first row, each row of magnets having a strong field side and a weak field side. That is to say, each row may itself be a Halbach array. Each row may be mounted on the rotor frame with the weak field side closer to the frame, for example adjacent to and/or in contact with the frame, than the strong field side. Thus, the faces from which the weak fields emanate may be in contact with the rotor frame. Alternatively, the arrays may be mounted in any other orientation.

Each row of magnets may be a single continuous row having the same, or a similar, length as the rotor frame. Alternatively, there may be more than two rows of magnets.

The magnets may be mounted to the frame, for example by an adhesive layer and/or fixing for example a mechanical fixing, for example screws, bolts, studs and/or a form interlock, or any other suitable means.

The Halbach array may optionally comprise a layer of magnetic material, for example a steel plate, for example located on the weak-field side of the array between the magnets and the frame when the array is mounted on the frame to contain any remaining magnetic flux.

The first and second rows of magnets may be mounted opposite each other on the rotor frame. The first and second rows of magnets may be oriented such that the strong field sides of the first and second rows are located between the rows. The faces of the first and second rows from which strong field sides emanate may face toward one another. This arrangement combines the strong fields of the two rows into a single field along the length of the rotor frame.

The electromotive machine may be arranged such that, in use, the stator passes between the first and second rows of magnets as the rotor moves. The stator may comprise an elongate body. The rotor frame may straddle the stator such that one part of the rotor is positioned on one side of the stator and another part of the rotor is positioned on an opposite side of the stator. In the case that the Halbach magnet array comprises two rows of magnets, the rotor frame may straddle the stator such that the first row is located on one side of the stator and the second row is located on the other side of the stator. In this arrangement, the strong field between the magnet arrays of the rotor may interact with the stator.

The stator may be at least twice the length of the rotor. Using a long stator may allow the rotor to achieve higher speeds.

The rotor frame may comprise two side walls, extending substantially parallel to one another. The side walls may be connected by a base section. Thus, the rotor frame may be 'U' shaped when viewed from an end. A magnet array may be mounted on the inward facing side of each wall. Each magnet array may be mounted adjacent to the distal end of the wall. Thus, the magnet arrays may extend parallel to each other and the magnetic fields emanating therefrom may be aligned along the length of the rotor body and combine to form a single field.

The frame may further comprise a one or more additional walls extending parallel to and/or located between the side walls, for example extending from the base section. A magnet array may be mounted adjacent to the distal end of each additional wall. A magnet array may be mounted on each side of an additional wall, thus each additional wall may have two magnet arrays mounted adjacent the distal end of the wall. The magnet arrays of the additional and side walls may extend parallel to each other and the magnetic fields emanating therefrom may be aligned along the length of the rotor body and combine to form a single field. The additional wall may be a similar length to the side walls, and thus the rotor may be 'W' shaped when viewed from an end. Such a rotor may find particular application in arrangements where parallel stator tracks are used.

In the case that magnet arrays are mounted on both sides of the additional wall the magnets may balance out the opposing magnetic forces allowing the additional wall to be thinner than would otherwise be the case. The magnet array(s) of the additional wall may be Halbach arrays or it may be that the magnet arrays(s) of the additional wall are not Halbach arrays.

Each side wall and/or the base may have a thickness that varies with distance along the length of the frame. Each side wall and/or the base may comprise an alternating pattern of thicker and thinner sections such that the frame is ribbed. The inward facing surface of each wall and/or the base may be flat. That is to say, the variation in thickness may be achieved by displacing the outward facing surfaces of the frame outwards. Ribbing of the rotor frame in such a manner may increase the strength of the rotor frame while keeping the corresponding increase in weight of the rotor frame down. If present, each additional wall may be similarly ribbed.

The rotor frame may comprise a skeleton, for example a non-metallic skeleton, for example a foam and/or wood skeleton. The fibre-reinforced polymer may extend over the skeleton, for example enclose a portion of, for example all of, the skeleton. The skeleton may be suitable for supporting the fibre-reinforced polymer during the laying up (manufacturing) process. Use of a skeleton may reduce the amount of fibre-reinforced polymer required and therefore reduce the weight of the rotor. Additionally and/or alternatively, use of a skeleton may facilitate the production of a wider range of shapes of frame.

The electromotive machine may be a motor, a generator and/or an eddy-current brake.

The electromotive machine may be configured such that, in use, the rotor moves while the stator remains stationary. Thus, it may be that the term 'rotor' refers to the part of the electromotive machine that moves, while the term 'stator' refers to the part of the electromotive machine which remains stationary.

In a second aspect of the invention there may be provided a transportation system including an electromotive machine in accordance with any other aspect. The rotor may be mounted on a carriage of the transportation system. In use, the carriage may travel along a predetermined path, for example a guide, for example rails, tracks or a roller guide system. The stator may be mounted adjacent to and/or on the guide. Thus, in use, the electromotive machine may function when the rotor on the carriage passes the stator. The electromotive machine may be used to accelerate and/or decelerate the carriage. The system may be arranged such that the motion of the carriage is linear in the vicinity of the stator of the machine such that the rotor passes through the stator in a straight line. The carriage may be configured to transport people and could be, for example, an amusement ride carriage, for example a roller coaster car. Thus, the transportation system may be a rail transportation system such as a roller coaster or other amusement ride, or a train, or any other transportation system suitable for transporting people. Alternatively, the carriage may be configured to transport objects as part of, for example, a freight handling system or a manufacturing production line. Thus, in further aspects of the invention there may be provided a transportation system, for example an amusement ride, roller coaster, freight handling system, or production line including an electromotive machine according to any other aspect.

The transportation may include one or more stators, for example a plurality of stators. A stator may be configured to produce a moving magnetic field. For example the stator may comprise windings that produce a moving magnetic field when energised and/or in which a current is induced. Such a stator may be referred to as a motor or generator stator. In that case, the electromagnetic machine may be a motor or generator. A stator, referred to as a brake stator, may comprise a conductor such that, in use, passage of the rotor over the conductor produces an eddy-current braking effect. In that case, the electromagnetic machine may be an eddy-current brake. There may be provided (for example the transportation system may comprise) an electromotive machine system comprising more than one stator, one of said stators being one of a motor, generator or brake stator and another of said stators being a different one of a motor, generator or brake stator. Thus, the same rotor may be used as part of two electromotive machines - for example any combination of a motor, generator and/or eddy-current brake.

According to a further aspect of the invention there is provided a method for moving a carriage of a transportation system with a linear electromotive machine, the linear electromotive machine comprising a stator and a rotor. The rotor comprises a rotor frame and a Halbach magnet array mounted on the rotor frame wherein the rotor frame comprises fibre-reinforced composite material. The method may comprise supplying current to a plurality of coils mounted on the stator thereby propelling the carriage along the guide system.

In a further aspect of the invention, there is provide a method of manufacturing an electromotive machine comprising a rotor and a stator, or a rotor therefor. The method may comprise the step of forming a rotor using a fibre-reinforce-polymer, for example carbon fibre. The method may comprise mounting a Halbach magnet array on the rotor.

The step of forming the rotor may comprise embedding a plurality of fibres in a polymer matrix, for example embedding carbon fibres in a polymer resin. The step of forming the frame may include creating a mould for the rotor prior to manufacturing the frame. The method may include a laying up step in which fibres, for example carbon fibres, are positioned over the mould. The method may include impregnating the fibres with resin. The method may include a step of curing the fibres and resin to form the rotor frame. After curing, the frame may undergo one or more finishing processes such as, for example, sanding, drilling of holes, or trimming excess materials, or any other suitable process.

The method of manufacturing the rotor may further comprise arranging a plurality of permanent magnets into a Halbach array. The method may comprise mounting said magnets on the rotor frame. The attachment of a Halbach array may be done at any suitable stage during, or after the manufacture of the rotor frame.

The method of manufacturing the rotor may comprise shaping the fibres around a skeleton, for example a non-metallic, for example a wood and/or foam skeleton prior to curing. A skeleton may be used in addition to, or instead of a mould. The method may comprise the skeleton remaining in the frame during and/or after curing. The method may comprise the skeleton remaining in the frame after the manufacturing process is complete, for example so that the skeleton is present in the frame during normal use.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figure 1 shows a cross sectional end view of a linear electromotive machine rotor according to a first example embodiment of the invention;
Figure 2 shows a perspective view of the rotor of the first embodiment;
Figure 3 shows a Halbach magnet array for use in the rotor of the first embodiment;
Figure 4a shows a cross sectional end view of a linear electromotive machine including a rotor according to the first embodiment;
Figure 4b shows a cross sectional plan view of a linear electromotive machine including a rotor according to the first embodiment;
Figure 4c shows a schematic of the coils of a stator of a linear electromotive machine suitable for use with a rotor according to the first embodiment;
Figure 5 shows a linear electromotive machine according to a second embodiment of the invention;
Figure 6 shows a linear electromotive machine according to a third embodiment of the invention;
Figure 7 (a) and 7(b) show transportation systems suitable for use with a rotor in accordance with embodiments of the invention; and
Figure 8 shows a flow chart for a method of manufacturing a rotor in accordance with embodiments of the invention.

### Detailed Description

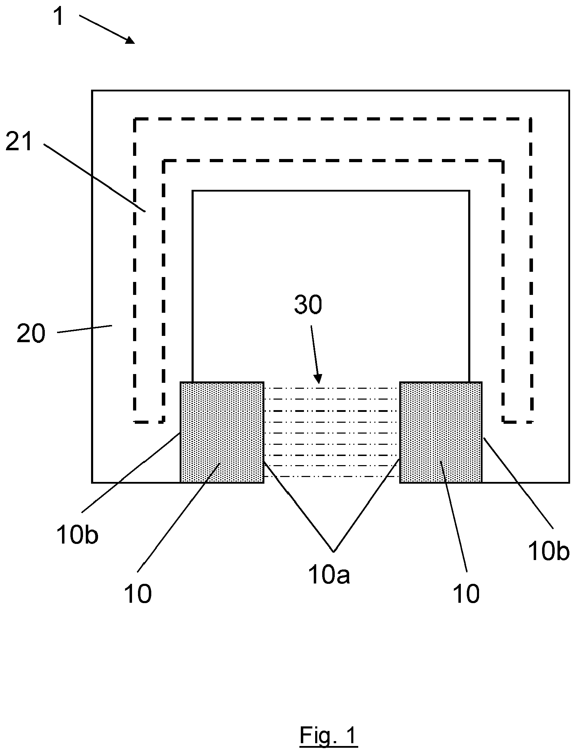

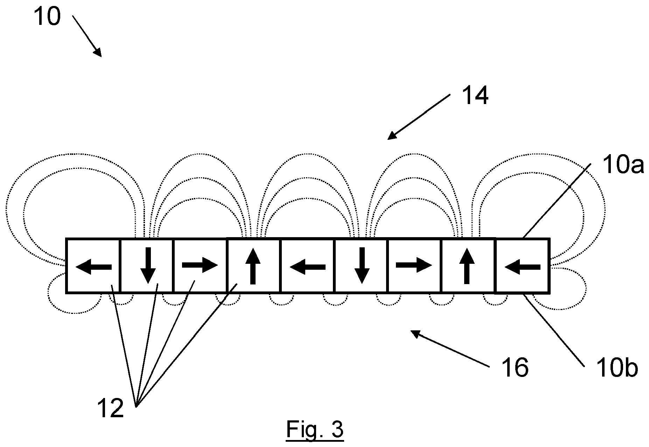

Figure 1 shows a cross sectional view of a rotor 1 of a linear electromotive machine according to a first embodiment of the invention. The rotor comprises a rotor frame 20 and two linear magnet arrays 10. The rotor frame 20 is 'U' shaped with two parallel sides, a closed side joining the parallel sides, and an open side. A linear Halbach magnet array 10 (see Fig. 3 for more detail) is mounted on the inner surfaces of each of the parallel sides of the rotor frame 20 at the distal end of the parallel sides and adjacent to the open side such that a space is formed in between the magnet arrays 10. The magnetic field 30 emanating from the inside faces 10a of the magnet arrays10 is represented by a dashed line in Fig. 1 and projects into the space between the magnets 10, the fields 30 from the two arrays combine with one another along the lengths of the arrays. The magnet arrays 10 connect to the rotor frame 20 via outside faces 10b. Rotor frame 20 is made from carbon fibre reinforced polymer. Enclosed within the carbon-fibre-reinforced polymer frame 20 is a 'U' shaped foam skeleton 21 (the outline of which is denoted by a dashed line in Fig. 1). In other embodiments the skeleton 21 may be absent. In some embodiments a mounting bracket for fixing the rotor frame 20 to a carriage is mounted on the frame.

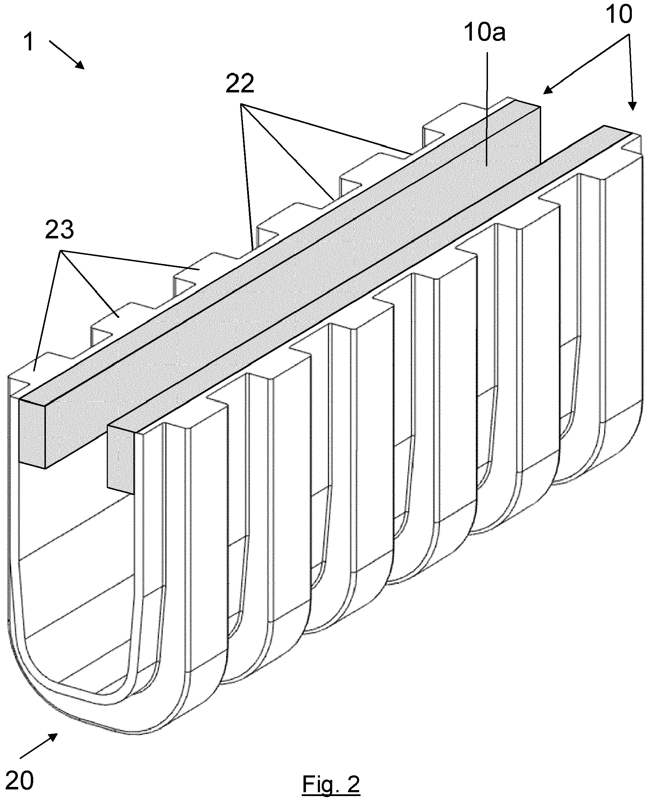

A perspective view of the rotor 1 of the first embodiment is shown in Figure 2. The thickness of the sides of the rotor frame 20 is variable along the length of the rotor frame 20. Thinner portions 22 of the frame 20 alternate along the length of the frame 20 with thicker portions 23 to form a ribbed frame. The inner faces of the sides of the rotor frame 20 are flat such that the variations in thickness from the ribbed and non-ribbed sections are only present on the outside of the rotor frame.

In Figure 2 the magnet arrays 10 are mounted along the edge of the parallel sides of the rotor frame adjacent to the open side and are the same length as the rotor frame. In other embodiments the magnets may be longer or shorter than the rotor frame, or mounted further from the open side. In Figure 2 the magnet arrays 10 are show as a single continuous array but in further embodiments the magnet arrays 10 may be comprised of two or more connected or disconnected smaller magnets or magnet arrays.

Figure 3 shows a plan view of magnet array 10 with inside face 10a (shown at the top side in Figure 3) and outside face 10b (shown at the bottom side in Figure 3). Each magnet array 10 is comprised of a series of individual magnets 12 arranged in a Halbach array configuration. In the embodiment shown in Figure 3, the magnets 12 of the Halbach array are oriented such that the polarity of each magnet is aligned either with, or perpendicular to, the longitudinal axis of the array, and each magnet 12 is rotated 90° with respect to the adjacent magnet in a repeating pattern such that every fourth magnet is has its polarity oriented in the same direction (the polarity is indicated by an arrow in Figure 3). In other embodiments, successive magnets in the array may be rotated by a smaller angle, for example 45 °, 30 °, or less, in a similar repeating pattern. In such configurations the magnetic field is asymmetric with a strong field 14 in which the magnetic flux is augmented (compared to the flux that would be present in an array with alternating (N-S-N-S) polarity) emanating from one side of the magnet array (the strong-field side) and a weak field 16 in which the magnetic flux is substantially cancelled emanating from the opposite side of the array (the weak-field side).

In the first embodiment the magnet arrays 10 are mounted on the body 20 such that the strong field 14 emanates from the inside faces of the magnet arrays, when mounted facing one another on the rotor frame 20. The strong fields 14 interact with one another such that they combine to form a single strong magnetic field between the magnet arrays. In this arrangement the outside faces 10b of the magnet arrays are adjacent to the parallel sides of the rotor frame 20.

The magnetic field emanating from the outside face 10b of the magnet array is a substantially cancelled weak field 16 and there is little or no flux. Consequently rotor bodies in accordance with the present invention need not include a conventional back iron comprised of a ferromagnetic material and/or may include a very much smaller back iron. Not only does the absence of a back iron (or reduction in its size) offer a potential weight saving over conventional rotor frames, it also facilitates the use of carbon-fibre rotor frame thereby further increasing the potential for weight saving.

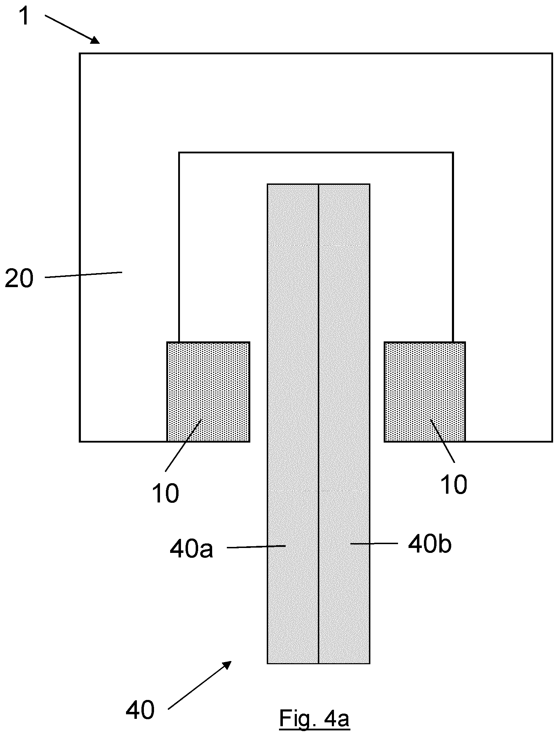

A cross sectional view of a machine including a rotor in accordance with the first embodiment of the invention is shown in Figure 4a. A linear stator 40 is positioned in the channel space between the sides of the rotor 1 such that the hollow of the channel of the 'U' shaped rotor 1 straddles the stator 40 and the stator sits within the magnetic field 30 that exists between the two rows of magnet arrays 10.

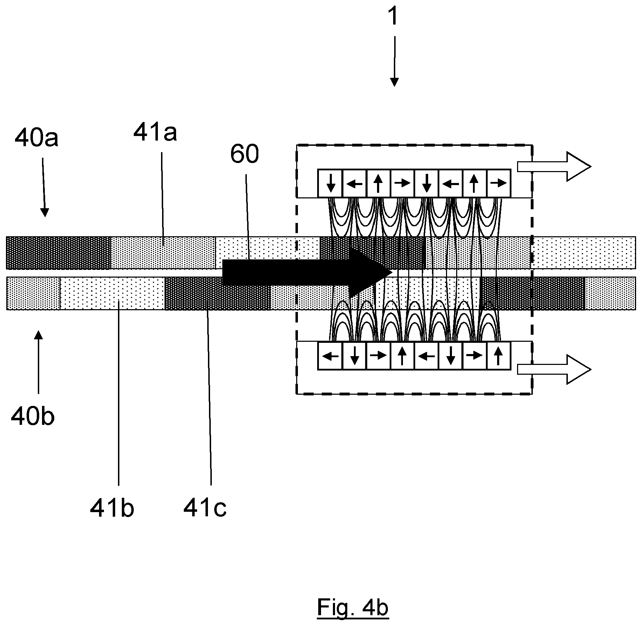

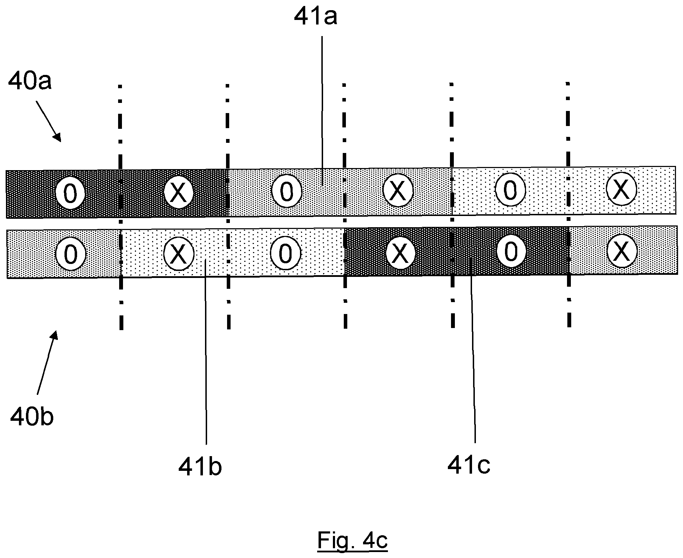

A plan view of the electromotive machine of Figure 4a is shown in Figure 4b. The rotor 1 is denoted by a dashed-line box in Figure 4b. The stator 40 comprises a first set of windings 41 on a first side 40a of the machine and a second set of windings 41 on a second side 40b of the machine, the rotor 1 extending over both sides of the stator 40. Each set of windings comprises current conducting coils wound in windings 41a, 41b, 41c as shown in Figure 4b. Each winding is wound with a separate phase of a three-phase AC supply, where each phase is separated by 120° electrical degrees in time and the three phases are arranged in a repeating pattern such that every third winding is supplied by the same phase (different coils being indicated by different shading patterns in Fig. 4). The windings 41a, 41b, 41c may be concentrated windings, distributed windings, or any other type of windings. The windings shown in Figure 4 are offset with respect to one another by a pitch of one and a half windings. In this arrangement the coils of each winding 41a, 41b, 41c are half way between two coils of the corresponding phase on the opposite side of the rotor.

The coils of windings 41a, 41b, 41c of the first side 40a and second side 40b are wound in opposite directions, as can be seen in Figure 4c, where 'O' and 'X' indicate coils conductors wound out of and into the plane of the figure, respectively and the dashed lines indicate separations in the halves of the coils. Taking, for example, winding 41b, it can be seen that the coils on the first side 40a are wound with the left half coming out of the plane of the figure, and the right half going into the plane of the figure, and that the equivalent coil on the second side 40b is wound in the opposite direction. When the windings are wound in this manner and offset by one and a half coil pitches, unwanted harmonics of the travelling magnetic field from both sides of the stator destructively interfere such that they are substantially cancelled, leaving only desired components of the travelling magnetic fields.

When energised in sequence the windings 41a, 41b, 41c of the stator produce a travelling magnetic field 60 around the windings that travels along the length of the stator in a manner that is well known in the art. The travelling magnetic field interacts with the magnetic field between the rows of magnet arrays 10 to produce a thrusting force on the rotor (shown by the arrows on the rotor) that urges the rotor along the stator.

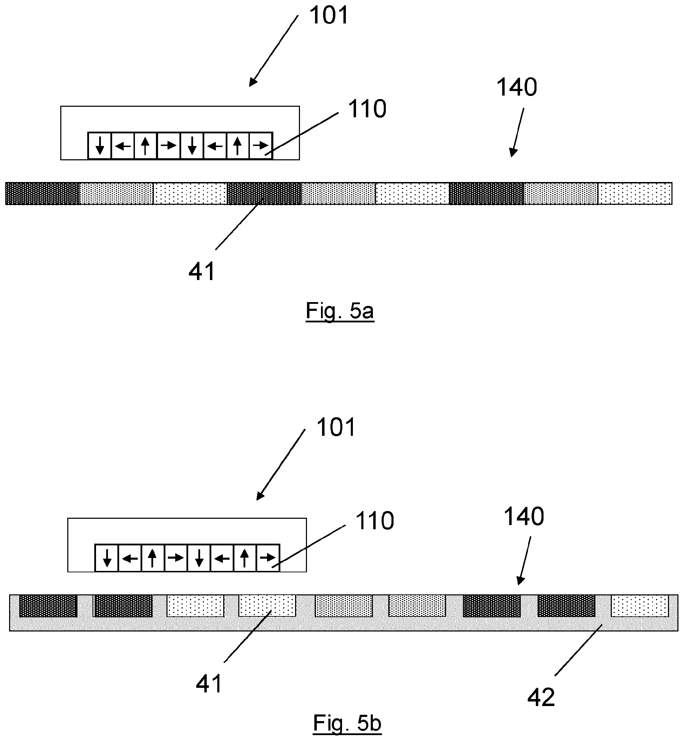

A second embodiment of the invention with a single sided stator 140 and single sided rotor 101 is shown in Figure 5a. In this embodiment the single sided stator 140 comprises windings 41 wound in the same manner as one of the sides of the two sided stator described in relation to Figure 4b. The rotor 101 is also constructed in the same manner as previously described, with a carbon fibre rotor frame 120 and Halbach magnet array 110 mounted thereon. The Halbach array 110 is arranged such that the strong field side is on the same side as the stator 140. Figure 5a shows the windings of the second embodiment wound without a solid core, but in other embodiments, as in Figure 5b windings 41 may be wound in slots on a core 42.

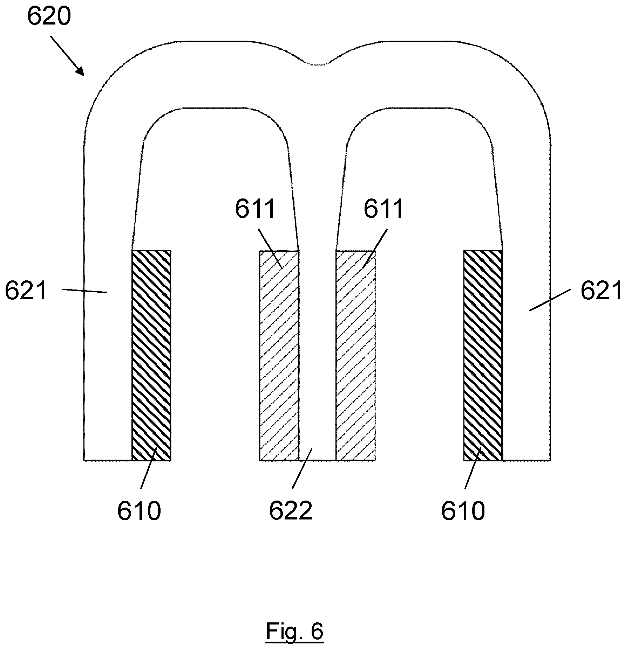

A cross sectional view of a third embodiment of the invention is shown in Figure 6. The rotor of this embodiment comprises a rotor frame 620 with two outer linear magnet arrays 610 and two inner linear magnet arrays 611. The rotor frame 620 is a 'W' shape with two parallel outer sides 621, an inner wall 622 located between and extending parallel to the two outer sides 621, a closed side joining the parallel outer sides 621 and inner wall 622, and an open side. An outer linear magnet array 610 is mounted on the distal end of the inner surface of each of the parallel outer sides 621 and adjacent to the open side, in a similar manner to the first embodiment. Two inner linear magnet arrays 611 are mounted on the distal end of the inner wall 622, with one array 611 on either side of the wall 622. Each outer magnet array 610 faces an inner magnet array 611. In this embodiment, a space is formed between both outer magnet array/inner magnet array pairings in a similar manner to the magnet array pair of the first embodiment.

Each outer side 621 is subject to a unidirectional net magnetic attraction force toward the inner wall 622 due to the magnetic attraction between the outer linear magnet arrays 610 and inner linear magnet arrays 611. The outer sides 621 are of sufficient thickness and strength to prevent the movement of the sides and outer linear magnet arrays toward the inner linear magnet arrays 611. The two inner linear magnet arrays 610 of the inner wall 622 are subject to two substantially equal magnetic attractive forces toward the outer linear magnet arrays 610, but in opposite directions. There is very little net directional force on the inner wall 622, and as such, the inner limb 622 of the example shown in Figure 6 is thinner and has a lower strength than the outer sides 621. This reduction in thickness results helps to keep the weight of the rotor frame 620 down.

In one example of the third embodiment, the inner linear magnet arrays 611 are Halbach arrays, and substantially no magnetic flux is present in the inner limb. In another example, the inner linear magnet arrays 611 are conventional magnetic arrays, with the sides of the inner linear magnet arrays 611 that are in contact with the inner limb being of opposite magnetic polarity such that a substantial magnetic flux is present in the inner limb.

In one example, the third embodiment may be considered as two rotors of the first embodiment joined together.

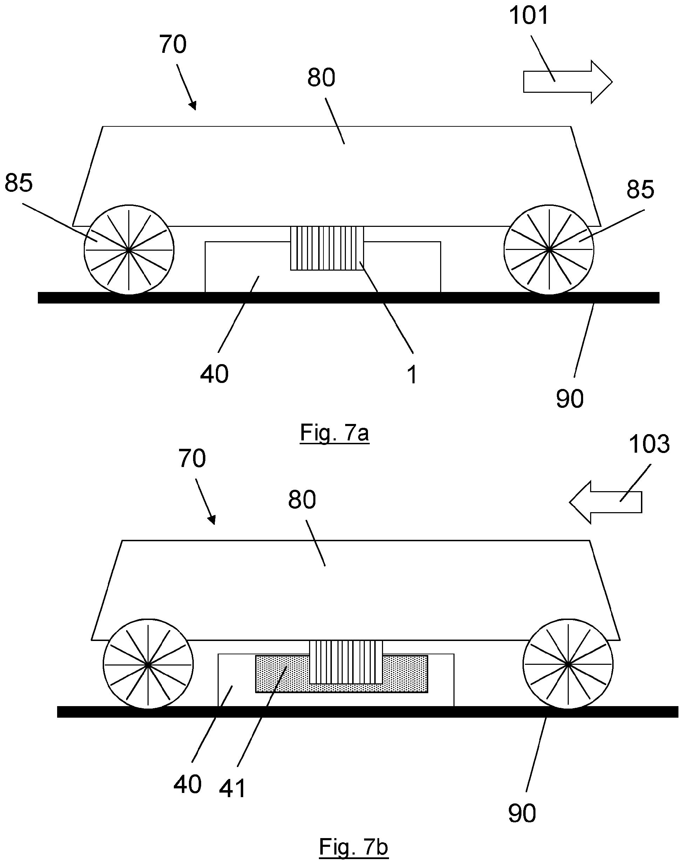

A transportation system 70 comprising a linear electromotive machine according to the first embodiment is shown in Figure 7a. The transportation system comprises moveable carriage 80 and stationary guiding track 90. The movable carriage 80 comprises rollers 85, and a rotor 1 in accordance with the first embodiment. A stator 40 is mounted on the track 90. The rotor 1 and the stator 40 combine to form an electromotive machine as described above. The rotor 1 is affixed to the carriage body 80. In use, the rollers 85 of the carriage 80 travel along the track 90. When the stator 40 is energised the interaction of the moving magnetic field of the stator 40 and moving magnetic field of the rotor 1 combine to produce a thrusting force denoted by arrow 101 in Figure 7a that moves the carriage 80 along the stationary guiding track 90 from left to right as shown in Figure 7a.

In a further example shown in Figure 7b, a stator 40 comprising conductor 41 is mounted on the stationary guiding track 90. In this example, as the carriage 80 moves forward the rotor 1 passes in close proximity to the conductor 41. Eddy currents are induced in the conductor 41 which produce a decelerating force indicated by arrow 103 in Figure 7b that acts to reduce the speed of a carriage 80 travelling from left to right in Figure 7b. In this example the rotor acts as an eddy current brake.

In the transportation system of Figures 7a and 7b the rollers 85 are mounted to the movable carriage body 80, however they may equally be attached to the stationary guiding track such that the carriage body rolls over the rollers.

In some embodiments the transportation system 70 is a roller coaster. In other embodiments the transportation system is a freight or baggage handling system. In further embodiments the transportation system is a public transport system. In further embodiments the transportation system is a vehicle launching system. In some embodiments (not shown) rollers 85 are replaced with wheels.

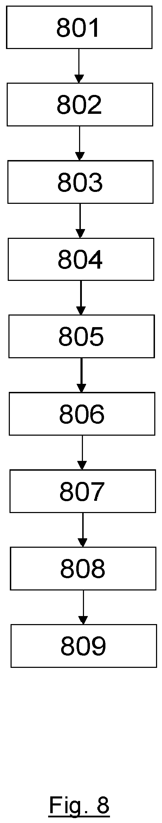

An example process for manufacturing a rotor according to the invention is shown in Figure 8. In step 801 a mould suitable for forming the rotor frame is produced. In step 802 a releasing agent or material is optionally applied to the mould to facilitate removal of the rotor frame from the mould. In step 803 carbon fibres are laid over or in the mould in the approximate shape of the rotor frame. In step 804 the polymer resin is applied to the carbon fibres. The resin may be painted on, sprayed on, or applied in any other suitable method. Alternatively, the carbon fibres may be impregnated with resin prior to use in step 803. In step 805 the fibres and resin are forced into approximately to the final shape of the rotor frame. This step may be done with a compression process, vacuum process, or any other suitable process. It is to be understood that the application of resin to the fibres in step 804 could alternatively occur at the same time as the compression as in, for example, a vacuum infusion method. In step 806 the compressed fibres and resin are cured. Step 806 may or may not include heating the resin and fibres to facilitate curing. In step 807 the cured rotor frame is removed from the mould. In step 808 the frame may undergo finishing processes including trimming, hole drilling, sanding and polishing, or any other finishing process typically applied to carbon fibre manufactured components. In step 809 Halbach arrays are mounted to the frame. It is to be understood, however, that the mounting of Halbach arrays could occur as part of an earlier step, for example, prior to the application of resin, or alternatively, for example, prior to the application of carbon fibres. Optionally, a skeleton or former may be used in addition to or instead of the mould in order to allow the fibres to be formed into the desired shape during the laying up process. The fibres may be shaped around the skeleton prior to curing. The skeleton may remain within the frame after curing. The skeleton may be made of a low density material, for example a foam and/or wood. Accordingly, methods in accordance with the present embodiment using a skeleton may allow for the production of a wider range of shapes of frame and/or a lighter frame as it may be possible to achieve the same frame shape with less fibre-reinforced polymer material.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In the embodiments described above the Halbach arrays are mounted on the inside of the rotor frame. It will be appreciated that magnet arrays could additionally or alternatively be mounted on the outside of the rotor frame.

In the embodiments described above the rotor body is 'U' or 'W' shaped. It will be appreciated that a differently shaped rotor body may be used.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A linear electromotive machine comprising a stator and a rotor, the rotor comprising a Halbach magnet array mounted on a fibre-reinforced polymer rotor frame.

2. A machine as claimed in claim 1 wherein the rotor frame is a carbon-fibre-reinforced polymer frame.

3. A machine as claimed in claim 1 or claim 2 wherein the frame does not include magnetic material.

4. A machine as claimed in any preceding claim wherein the Halbach magnet array is comprised of a first row of magnets and a second row of magnets spaced apart from the first row, each row of magnets itself being a Halbach array having a strong field side and a weak field side.

5. A machine as claimed in claim 4 wherein the surfaces of the first and second rows from which strong field sides emanate face toward one another.

6. A machine as claimed in claim 4 or claim 5 wherein the machine is configured such that, in use, the stator passes between the first and second row of magnets.

7. A machine as claimed in any preceding claim wherein the rotor frame comprises two walls extending parallel to each other, and optionally wherein the machine is configured such that, in use, the stator passes between the two walls.

8. A machine as claimed in claim 7 when dependent on claim 4 to 6 wherein the first row of magnets is located adjacent the distal end of one wall and the second set of magnets is located adjacent the distal end of the other wall.

9. A machine as claimed in any previous claim wherein the linear electromotive machine is an alternating current synchronous motor, for example wherein the linear electromotive machine is a polyphase machine, for example a three phase machine.

10. A machine as claimed in any previous claim wherein the stator comprises a first set of coils and a second set of coils, and the coils of the first set are offset relative to the second set of coils so that corresponding coils of each group are not aligned and an n-pole harmonic of a magnetic field produced by the groups is substantially cancelled, where n is a positive, even integer.

11. A transportation system comprising a carriage configured to follow a predetermined path and an electromotive machine as claimed in any previous claim, the rotor being mounted on the carriage.

12. A transportation system according to claim 11, wherein the carriage is configured to travel along a guide and the stator is mounted adjacent to and/or on the guide.

13. A transportation system according to claims 11 or 12, wherein the transportation system is an amusement ride, for example a roller coaster.

14. A method of manufacturing an electromotive machine comprising a rotor and a stator, the method comprising the following steps:
- forming a rotor using a fibre-reinforced polymer, for example carbon fibre; and
- mounting a Halbach magnet array on the rotor.

15. A method according to claim 14, wherein the step of forming a rotor using a fibre-reinforced polymer comprises laying up a plurality of fibres on a skeleton.
